(19) Europäisches Patentamt / European Patent Office / Office européen des brevets

(11) **EP 4 064 138 A1**

(12) **EUROPEAN PATENT APPLICATION**

(43) Date of publication:
**28.09.2022 Bulletin 2022/39**

(21) Application number: **22161139.5**

(22) Date of filing: **09.03.2022**

(51) International Patent Classification (IPC):
**G06N 20/00** (2019.01)     **G05B 23/00** (2006.01)
**G05B 17/00** (2006.01)     **H04Q 9/00** (2006.01)

(52) Cooperative Patent Classification (CPC):
**G05B 19/4184; G05B 23/00; G06N 20/00;**
**H04Q 9/00;** H04Q 2209/40

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **26.03.2021 JP 2021054146**

(71) Applicant: **Yokogawa Electric Corporation**
**Musashino-shi, Tokyo 180-8750 (JP)**

(72) Inventor: **MITOMO, Nobuhiro**
**Musashino-shi, Tokyo, 180-8750 (JP)**

(74) Representative: **Winter, Brandl - Partnerschaft**
**mbB**
**Alois-Steinecker-Straße 22**
**85354 Freising (DE)**

(54) **APPARATUS, METHOD, AND PROGRAM FOR EVALUATING THE DETERIORATION OF AN OBJECT**

(57)     SOLUTION: Provided is an apparatus comprising an acquisition portion (20) for acquiring measurement data measured for a state of an object; a storage portion (43) for storing a model (431) that outputs deterioration strength index value indicating strength of causing the object to deteriorate, and a deterioration parameter indicating a correspondence between the deterioration strength index value and a progression rate of deterioration of the object, in response to an input of the measurement data; and an estimation portion (48) for estimating a progression rate of deterioration of the object by using the deterioration strength index value outputted in response to inputting the measurement data into the model (431), and the deterioration parameter.

FIG.1

EP 4 064 138 A1

## Description

BACKGROUND

1. TECHNICAL FIELD

The present invention relates to an apparatus, a method, and a program.

2. RELATED ART

In the Patent document 1, there is a description, "a deterioration amount of a state of the monitoring object per unit time is calculated based on a model to convert a value of... a parameter related to varying amounts of a deterioration state... into a varying amount of the change over time" (claim 1).

[Prior Art Document]

[Patent Document]

[Patent Document 1] Japanese Patent Application Publication No. 2009-244061

[GENERAL DISCLOSURE]

In the first aspect of the present invention, an apparatus is provided. The apparatus may comprise an acquisition portion for acquiring measurement data measured for a state of an object. The apparatus may comprise a storage portion for storing a model that outputs a deterioration strength index value indicating strength of causing the object to deteriorate, and a deterioration parameter indicating a correspondence between the deterioration strength index value and a progression rate of deterioration of the object, in response to an input of the measurement data. The apparatus may comprise an estimation portion for estimating a progression rate of deterioration of an object by using a deterioration strength index value outputted in response to inputting measurement data into a model and a deterioration parameter.

The estimation portion may be configured to estimate a deterioration accumulation rate of the object by integrating a progression rate of deterioration estimated by using the deterioration strength index value outputted in response to inputting the measurement data into the model, and the deterioration parameter.

The apparatus may comprise a transmitter for the transmitting measurement data acquired by the acquisition portion to other apparatus. The apparatus may comprise a receiver for receiving the model and the deterioration parameter from the other apparatus.

The apparatus may comprise a learning processing portion for generating the model by using learning data including the measurement data and a value indicating a deterioration state of the object. The apparatus may comprise a calculation portion for calculating a deterioration parameter indicating a correspondence between a deterioration strength index value and a progression rate of deterioration of an object.

In the second aspect of the present invention, an apparatus is provided. The apparatus may comprise an acquisition portion for acquiring measurement data from an object. The apparatus may comprise a learning processing portion for generating a model that outputs a deterioration strength index value indicating strength of causing the object to deteriorate in response to the input of measurement data by using learning data including measurement data and a value indicating a deterioration state of an object. The apparatus may comprise a calculation portion for calculating a deterioration parameter indicating a correspondence between a deterioration strength index value and a progression rate of deterioration of an object.

The apparatus may comprise a transmitter for transmitting the model and the deterioration parameter to other apparatus that acquires the measurement data from the object.

The learning processing portion may be configured to generate the model by using the learning data including the measurement data and a value indicating a deterioration state of the object for each of a plurality of periods of time when the measurement data was measured.

The value indicating the deterioration state may be a binary value indicating whether there is a progression of deterioration of the object or not.

The calculation portion may calculate the deterioration parameter based on a sum total of the deterioration strength index values outputted from the model in response to an input of the measurement data measured during a period of time when a deterioration of the object progressed, and a progression rate of deterioration that increased during the period of time.

The deterioration parameter may indicate a progression rate of deterioration of the object per unit amount of the deterioration strength index value.

The model may output, as the deterioration strength index value, a level of divergence between the inputted measurement data and the measurement data in a case where a deterioration of the object does not progress.

The model may output, as the deterioration strength index value, a level of divergence between the inputted measurement data and the measurement data in a case where a deterioration of the object is on a boundary regarding whether a deterioration of the object progresses or not.

In the third aspect of the present invention, a method is provided. The method may comprise acquiring measurement data measured for a state of an object. The method may comprise storing a model that outputs a deterioration strength index value indicating strength of causing the object to deteriorate, and a deterioration parameter indicating a correspondence between the deterioration strength index value and a progression rate of deterioration of the object, in response to an input of the measurement data. The method may comprise estimating a progression rate of deterioration of the object by using the deterioration strength index value outputted in response to inputting the measurement data into the model, and the deterioration parameter.

In the fourth aspect of the present invention, a method is provided. The method may comprise acquiring measurement data from an object. The method may comprise processing learning by generating a model that outputs a deterioration strength index value indicating strength of causing the object to deteriorate in response to the input of measurement data by using learning data including measurement data and a value indicating a deterioration state of an object. The method may comprise calculating a deterioration parameter indicating a correspondence between a deterioration strength index value and a progression rate of deterioration of an object.

In the fifth aspect of the present invention, a program is provided. The program may cause the computer to function as an acquisition portion for acquiring measurement data measured for a state of an object. The program may cause the computer to function as a storage portion for storing a model that outputs a deterioration strength index value indicating strength of causing the object to deteriorate, and a deterioration parameter indicating a correspondence between the deterioration strength index value and a progression rate of deterioration of the object, in response to an input of the measurement data. The program may cause the computer to function as an estimation portion for estimating a progression rate of deterioration of the object by using a deterioration strength index value outputted in response to inputting measurement data into a model and a deterioration parameter.

In the sixth aspect of the present invention, a program is provided. The program may cause the computer to function as an acquisition portion for acquiring measurement data from an object. The program may cause the computer to function as a learning processing portion for generating a model that outputs a deterioration strength index value indicating strength of causing the object to deteriorate in response to the input of measurement data by using learning data including measurement data and a value indicating a deterioration state of an object. The program may cause the computer to function as a calculation portion for calculating a deterioration parameter indicating a correspondence between a deterioration strength index value and a progression rate of deterioration of the object.

The summary clause does not necessarily describe all necessary features of the embodiments of the present invention. The present invention may also be a sub-combination of the features described above.

BRIEF DESCRIPTION OF THE DRAWINGS

Fig. 1 shows a system 1 according to an embodiment.

Fig. 2 illustrates the operation of the system 1.

Fig. 3 shows a correspondence between a deterioration state measurement value and a deterioration strength index value KPI.

Fig. 4 illustrates an example of a computer 2200 in which a plurality of aspects of the present invention may be entirely or partially embodied.

DESCRIPTION OF EXEMPLARY EMBODIMENTS

Hereinafter, the present invention will be described through embodiments of the invention, but the following embodiments do not limit the invention according to the claims. In addition, not all of the combinations of features described in the embodiments are necessarily essential for the solution of the invention.

[1. Configuration of a system 1]

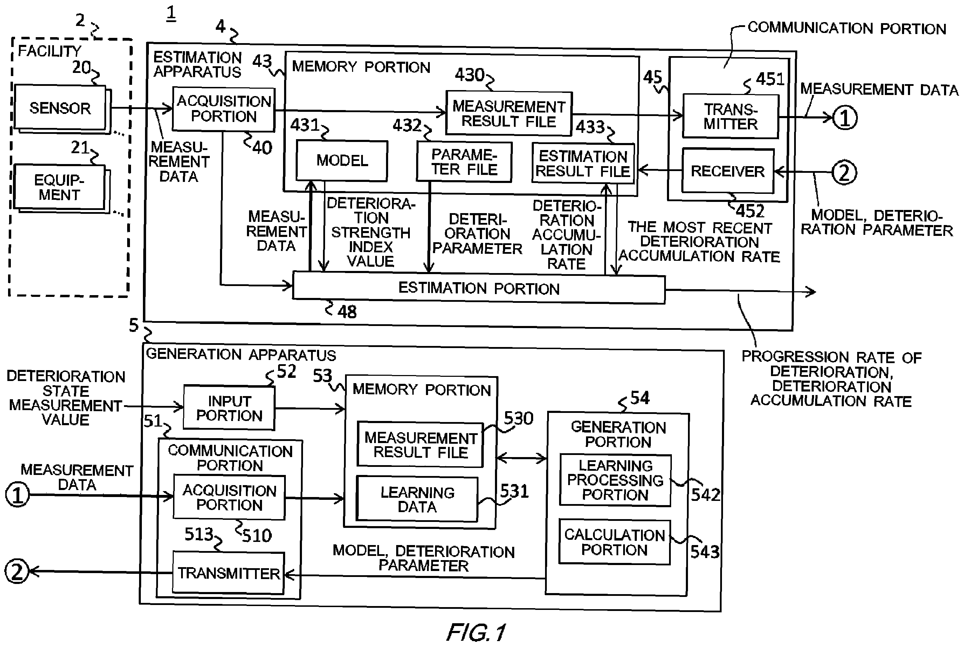

Fig. 1 shows a system 1 according to the present embodiment. The system 1 is to support in monitoring a state of an object and comprises a facility 2 as an example of an object, an estimation apparatus 4, and a generation apparatus 5.

[1-1. Facility 2]

The facility 2 is provided with one or more sensors 20. The facility 2 may be further provided with one or more equipment 21.
For example, the facility 2 may be a plant, a composite apparatus combining a plurality of equipment 21, or an equipment provided within other facilities such as a plant or a composite apparatus (as an example, piping). Examples of the plant include not only an industrial plant such as a chemical or bio plant but also a plant that manages and controls a well source such as a gas field or an oil field and its surrounding area, a plant that manages and controls electric power generation such as hydroelectric, thermal, or nuclear power generation, a plant that manages and controls environmental electric power generation such as solar or wind power generation, a plant that manages and controls water and sewerage or a dam, and the like.

[1-1-1. Equipment 21]

Each piece of equipment 21 is an instrument, a machine, or an apparatus, and may be, for example, an actuator such as a valve, a pump, a heater, a fan, a motor, or a switch that controls at least one physical quantity such as pressure, temperature, pH, velocity, or flow rate in a process of the facility 2. Each piece of equipment 21 may be of different types, or at least some (two or more) pieces of equipment 21 may be of the same type. The equipment 21 may be wirelessly or wired controlled from the outside, or may be manually controlled.

[1-1-2. Sensor 20]

Each sensor 20 measures the state of the facility 2. The sensor 20 may measure at least one physical quantity such as pressure, temperature, pH, velocity, flow rate, and the like. In addition, the sensor 20 may measure the yield of the facility 2, the proportion of impurities to be mixed, the operation status of each piece of equipment 21, and the like. A measurement measured by the sensor 20 may be a process value used in the PID control. Each sensor 20 may be of different types, or at least some (two or more) of the sensors 20 may be of the same type. The sensor 20 may perform a measurement at certain intervals. Each sensor 20 may supply a measurement result to the estimation apparatus 4.
Note that the communication between the sensor 20 and the estimation apparatus 4 may be performed, for example, in a wireless communication protocol of the ISA (International Society of Automation), and as an example, may be performed in ISA 100, HART (Highway Addressable Remote Transducer) (registered trademark), BRAIN (registered trademark), FOUNDATION Fieldbus, PROFIBUS, or the like.

[1-2. Estimation apparatus 4]

The estimation apparatus 4 is an example of an apparatus of the first embodiment, and estimates a deterioration state of the facility 2. The estimation apparatus 4 may be an edge device arranged within a plant so as to store measurement data measured by each sensor 20. The estimation apparatus 4 has an acquisition portion 40, a storage portion 43, a communication portion 45, and an estimation portion 48.

[1-2-1. Acquisition portion 40]

The acquisition portion 40 acquires measurement data measured for a state of the facility 2. The acquisition portion 40 may sequentially acquire measurement data from a plurality of sensors 20. For example, if the facility 2 is a piping, the measurement data may be data related to at least one of a temperature, a pressure, or a flow rate of a top part of the piping. The acquisition portion 40 may supply the acquired measurement data to the storage portion 43. The acquisition portion 40 may add, to measurement data, its measurement time (or a time for acquiring by the acquisition portion 40) and identification information of the sensor 20 that measured the data, so as to supply it to the storage portion 43. Note that the measurement time and the identification information of the sensor 20 may be added in advance to the measurement data supplied from the sensor 20.

[1-2-2. Storage portion 43]

The storage portion 43 stores various types of information. For example, the storage portion 43 may store a measurement result file 430, a model 431, a parameter file 432, and an estimation result file 433. Note that the model 431 and the deterioration parameter, which is described below, in the parameter file 432 may be stored in the storage portion 43 in response to supplying from the generation apparatus 5 to the estimation apparatus 4 via the communication portion 45.

[1-2-2 (1). Measurement result file 430]

The measurement result file 430 stores the measurement data supplied from the acquisition portion 40.

[1-2-2 (2). Model 431]

The model 431 outputs a deterioration strength index value of the facility 2 in response to an input of measurement data. The deterioration strength index value indicates strength of causing the facility 2 to deteriorate. For example, if the facility 2 is a piping, the deterioration strength index value may be strength by which the thickness of the piping is reduced.
The model 431 may output, as the deterioration strength index value, a level of divergence between an inputted measurement data and measurement data in the case where deterioration of the facility 2 does not progress. As an example, the model 431 may output, as the deterioration strength index value, a level of divergence between an inputted measurement data and measurement data in the case where deterioration of the facility 2 is on the boundary regarding whether the deterioration progresses or not. A boundary of measurement data regarding whether the deterioration progresses or not may be a boundary between the distribution of measurement data in the case where the deterioration progresses and the distribution of measurement data in the case where the deterioration does not progress, and may be determined by a learning processing for generating the model 431.
Note that the model 431 may be a model that uses a conventionally known categorization algorithm of machine learning. If the model 431 is a classifier, the model 431 may be a model having learned by using binary teaching data indicating whether the facility 2 deteriorated or not when measurement data is measured, and may output a deterioration strength index value before being binarized by comparing to a threshold value.

[1-2-2 (3). Parameter file 432]

The parameter file 432 stores various parameters. For example, the parameter file 432 may store a deterioration parameter indicating a correspondence between a deterioration strength index value and a progression rate of deterioration of the facility 2.

The deterioration parameter may indicate a progression rate of deterioration per unit amount of the deterioration strength index value. The deterioration parameter may be a fixed value.

The progression rate of deterioration may indicate a measured or estimated progression amount of deterioration of the facility 2, and may indicate how much a deterioration will progress or how much deterioration has progressed. For example, the progression rate of deterioration may indicate a progression amount of deterioration since the progression rate of deterioration had been measured or estimated previously. As an example, measurement or estimation may be performed for the progression rate of deterioration for each reference time (as an example, a measurement period of measurement data), and the progression rate of deterioration may indicate a progression amount of deterioration of the facility 2 at the reference time. If the facility 2 is a piping, the progression rate of deterioration may be a reduction in thickness of the piping, that is reduced amount in its thickness.

The progression rate of deterioration per unit amount of the deterioration strength index value may indicate a progression amount of deterioration in the case where the facility 2 is exposed for a unit time (as an example, the above-mentioned reference time) to the state indicated by a unit amount of a deterioration strength index value.

[1-2-2 (4). Estimation result file 433]

An estimation result file 433 stores an estimation result estimated by the estimation portion 48. In the present embodiment, as an example, the estimation result file 433 may store a deterioration accumulation rate Va outputted every time the estimation portion 48 performs an estimation.

[1-2-3. communication portion 45]

The communication portion 45 communicates with the generation apparatus 5. The communication portion 45 may perform wireless communication or wired communication. The communication portion 45 may communicate via a repeater such as a gateway device. The communication portion 45 has a transmitter 451 and a receiver 452.

[1-2-3 (1). Transmitter 451]

The transmitter 451 transmits measurement data acquired by the acquisition portion 40 to the generation apparatus 5. In the present embodiment, as an example, the transmitter 451 may transmit measurement data stored in the measurement result file 430 of the storage portion 43 to the generation apparatus 5.

[1-2-3 (2). Receiver 452]

The receiver 452 receives the model 431 and a deterioration parameter from the generation apparatus 5. The receiver 452 may cause the received model 431 and the deterioration parameter to be stored in the storage portion 43.

[1-2-4. Estimation portion 48]

The estimation portion 48 estimates a progression rate of deterioration of the facility 2 by using a deterioration strength index value outputted in response to inputting measurement data into the model 431, and a deterioration parameter.

The estimation portion 48 may sequentially calculate a progression rate of deterioration Vp (i) from the following equation (1) by using a deterioration strength index value KPI (i) outputted from the model 431 in response to the input of measurement data measured at an i-th (i is an integer) measurement time point, and a deterioration parameter Coef stored in the storage portion 43:

$$Vp(i) = KPI(i) \times Coef \quad (1)$$

Also, the estimation portion 48 may estimate a deterioration accumulation rate of the facility 2 by integrating the estimated progression rate of deterioration Vp. The deterioration accumulation rate may indicate the degree of deterioration accumulated in the facility 2, and, as an example, may indicate a progression rate of deterioration since the service of the facility 2 had been started. As an example, if the facility 2 is a piping, a deterioration accumulation rate may be a reduction in thickness from the initial state of the piping.

The estimation portion 48 may calculate a deterioration accumulation rate V (i) from a sum total of the previously calculated progression rates of deterioration Vp (i) and may calculate a deterioration accumulation rate Va (i) from a sum of the last calculated deterioration accumulation rate Va (i-1) calculated and a newly calculated progression rate of deterioration Vp (i). For example, the estimation portion 48 may calculate a deterioration accumulation rate Va (i) according to an i-th measurement data from the following equation (2):

$$Va(i) = Vp(i) + Va(i-1) \quad (2)$$

The estimation portion 48 may read the last calculated deterioration accumulation rate Va (i-1) from the estimation result file 433 in the storage portion 43. Also, the estimation portion 48 may store the newly calculated deterioration accumulation rate Va (i) in the estimation result file 433 in the storage portion 43. The estimation portion 48 may output the newly calculated progression rate of deterioration Vp (i) and the deterioration accumulation rate Va (i). For example, the estimation portion 48 may cause a display portion, which is not shown in the drawing, to display these estimation results.

[1-3. Generation apparatus 5]

The generation apparatus 5 is an example of an apparatus of a second embodiment and generates the model 431 and deterioration parameter. The generation apparatus 5 has the communication portion 51, the input portion 52, the storage portion 53, and the generation portion 54. Note that the generation apparatus 5 may be one or more computers, may be configured by a PC or the like, or may be realized by cloud computing.

[1-3-1. Communication portion 51]

The communication portion 51 communicates with the estimation apparatus 4. The communication portion 51 may perform wireless communication or wired communication. The communication portion 51 has the acquisition portion 510 and the transmitter 513.

[1-3-1 (1). Acquisition portion 510]

The acquisition portion 510 acquires measurement data from the estimation apparatus 4. The acquisition portion 510 may supply the acquired measurement data to the storage portion 53.

[1-3-1 (2). Transmitter 513]

The transmitter 513 transmits the model 431 and a deterioration parameter to the estimation apparatus 4.

[1-3-2. Input portion 52]

The input portion 52 inputs various data in response to an operation of an operator. The input portion 52 may supply the inputted content to the storage portion 53 or the like.
For example, the input portion 52 may input measurement indicating a deterioration state of the facility 2 (also referred to as a deterioration state measurement value). The deterioration state measurement value may indicate the deterioration amount accumulated in the facility 2 since a service of the facility 2 had started, and may be a value corresponding to a deterioration accumulation rate. As an example, if the facility 2 is a piping, the deterioration state measurement value may be a measurement of the wall thickness.
The deterioration state measurement value may be measured without using the sensor 20 of the facility 2, and may not be included in measurement data. The deterioration state measurement value may be measured by an operator, for example, during the maintenance of the facility 2. The measurement period of a deterioration state measurement value may be the same as that of the measurement data measured by the sensor 20, and may be different from that of the measurement data measured by the sensor 20.

[1-3-3. Storage portion 53]

The storage portion 53 stores various types of information. For example, the storage portion 53 may store a measurement result file 530 and learning data 531.
The measurement result file 530 stores the measurement data supplied from the acquisition portion 510. In addition to this, the measurement result file 530 may store a deterioration state measurement value supplied from the input portion 52.
The learning data 531 includes the measurement data supplied from the acquisition portion 510 and the value indicating a deterioration state of the facility 2 (also referred to as a deterioration state index value). The learning data 531 may include a deterioration state index value for each of a plurality of periods of time when measurement data was measured.
The deterioration state index value may be a binary value indicating whether there is a progression of deterioration of the facility 2 or not when the measurement data was measured or at a time before and after the measurement time. As an example, the deterioration state index value may be set, for example, by an operator via the input portion 52 and added to each measurement data as a label based on the deterioration state measurement value. However, the deterioration state index value may be a deterioration state measurement value itself.

[1-3-4. Generation portion 54]

The generation portion 54 has a learning processing portion 542 and a calculation portion 543.

[1-3-4 (1). Learning processing portion 542]

The learning processing portion 542 generates the model 431 by a learning processing that uses the learning data 531. The learning processing portion 542 may supply the generate model 431 to the communication portion 51.

[1-3-4 (2). Calculation portion 543]

A calculation portion 543 calculates a deterioration parameter. The calculation portion 543 may supply the calculated deterioration parameter to the communication portion 51.

The calculation portion 543 may calculate the deterioration parameter based on a sum total of deterioration strength index values outputted from the model 431 in response to an input of the measurement data measured during the period of time when deterioration of the facility 2 progressed (also referred to as a deterioration progression time period), and a progression rate of deterioration of the facility 2 that increased during the period of time.

As an example, the calculation portion 543 may calculate the deterioration parameter Coef from the following equation (3) by using a sum total of the deterioration strength index values $\Sigma\{KPI(i)\}$, and an increment of the progression rate of deterioration Vp that increased during a deterioration progression time period:

$$Coef = Vp/\Sigma\{KPI(i)\} \quad (3)$$

The deterioration progression time period may be a period of time when deterioration of the facility 2 progressed as a whole, and may include a period of time when the deterioration did not progress. The progression rate of deterioration Vp of the deterioration progression time period may be an increment between the deterioration state measurement value at the end period of the deterioration progression time period and the deterioration state measurement value at the beginning period.

According to the estimation apparatus 4 in the system 1 described above, the progression rate of deterioration Vp (i) is estimated by using the deterioration strength index value KPI (i) outputted in response to inputting measurement data into the model 431, and the deterioration parameter Coef indicating a correspondence between the deterioration strength index value KPI and the progression rate of deterioration Vp. Thus, by using the deterioration strength index value KPI (i) according to the new measurement data, and the deterioration parameter Coef, the portion of the progression rate of deterioration Vp (i) that increased when the new measurement data is measured can be sequentially estimated. Thus, because the deterioration accumulation rate Va (i) of the facility 2 can be acquired by sequentially integrating progression rates of deterioration Vp (i), a degree of deterioration of the facility 2 can be estimated with high accuracy.

Also, because the newly calculated progression rate of deterioration Vp (i) is integrated so as to calculate the deterioration accumulation rate Va (i), the deterioration accumulation rate Va can be easily checked.

Also, because the measurement data is transmitted to the generation apparatus 5 and the model 431 and the deterioration parameter KPI are received from the generation apparatus 5, deterioration of the facility 2 can be estimated without performing, in the estimation apparatus 4, the generation of the model 431 and the calculation of the deterioration parameter KPI.

Also, because a level of divergence between the inputted measurement data and the measurement data in the case where deterioration of the facility 2 does not progress is outputted as a deterioration strength index value from the model 431, the deterioration strength index value that precisely indicates the strength to cause the facility 2 to deteriorate can be acquired.

Also, because a level of divergence between the inputted measurement data and the measurement data on the boundary regarding whether deterioration of the facility 2 progresses or not is outputted as a deterioration strength index value from the model 431, the deterioration strength index value that even more precisely indicates the strength to cause the facility 2 to deteriorate can be acquired.

Also, according to the generation apparatus 5 in the system 1, because the model 431 that outputs the deterioration strength index value KPI in response to the input of measurement data is generated and the deterioration parameter Coef is calculated, the portion of the progression rate of deterioration Vp (i) that increased when the new measurement data is measured can be sequentially estimated by using the deterioration strength index value KPI (i) outputted in response to inputting new measurement data into the model 431 and the deterioration parameter Coef. Thus, because the deterioration accumulation rate Va (i) the facility 2 can be acquired by sequentially integrating the progression rate of deterioration Vp (i), a degree of deterioration of the facility 2 can be estimated with high accuracy.

Also, because the model 431 is generated by using the learning data 531 that includes measurement data and the deterioration state index value for each of a plurality of periods of time when the measurement data was measured, the portion of the progression rate of deterioration Vp that increased when measurement data was measured can be estimated with high accuracy.

Also, because the deterioration parameter is calculated based on a sum total of deterioration strength index values outputted from the model 431 in response to an input of the measurement data measured during the deterioration progression time period, and a progression rate of deterioration of the facility 2 that increased during the period of time, the progression rate of deterioration Vp can be estimated with a high accuracy.

Also, because the deterioration parameter Coef indicating the progression rate of deterioration per unit amount of the deterioration strength index value KPI is calculated, the portion of the progression rate of deterioration Vp that increased when new measurement data is measured can be easily estimated.

Also, because the model 431 and the deterioration parameter are transmitted to the estimation apparatus 4, the estimation can be performed without the model 431 being generated by the estimation apparatus 4.

[2. Operation of the system 1]

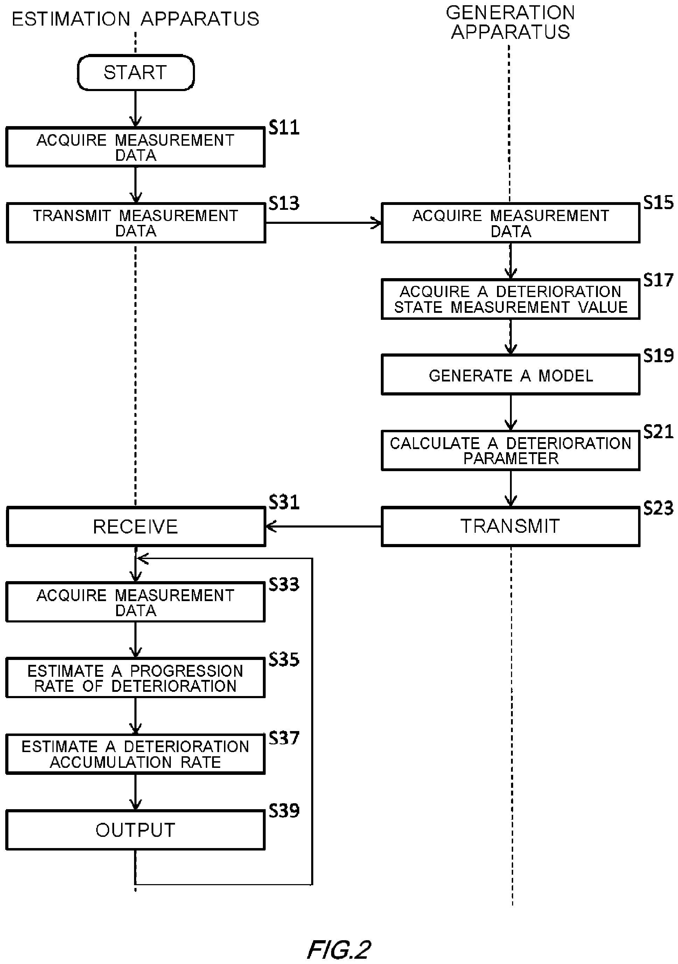

Fig. 2 illustrates an operation of the system 1. The estimation apparatus 4 and the generation apparatus 5 of the system 1 perform the generation of the model 431 and calculation of a deterioration parameter by performing the processes of step S11-39, so as to estimate the deterioration state of the facility 2. Note that this operation may start, following the service of the facility 2.

At step S11, the acquisition portion 40 of the estimation apparatus 4 acquires, from each sensor 20, the measurement data measured for the state of the facility 2. The acquired measurement data may be stored in the storage portion 43.

At step S13, the transmitter 451 transmits measurement data to the generation apparatus 5. Thereby, at step S15, the acquisition portion 510 of the generation apparatus 5 acquires measurement data from the estimation apparatus 4. The acquisition portion 510 may cause the acquired measurement data stored in the storage portion 53.

At step S17, the input portion 52 causes the storage portion 53 to store, in response to an operation by an operator, the deterioration state measurement value at a time when the measurement data was measured or at a period of time before and after the measurement time. Also, the input portion 52 may add a binary label as a deterioration state index value to measurement data in response to an operation by an operator. Thereby, the learning data 531 is stored in the storage portion 53.

At step S19, the learning processing portion 542 generates the model 431 by a learning processing that uses the learning data 531. For example, the learning processing portion 542 may generate the model 431 so that the correlation increases between the deterioration strength index value outputted when measurement data is inputted into the model 431 and the deterioration state index value corresponding to the measurement data (as an example, a binary value indicating whether there is a progression of deterioration or not).

At step S21, the calculation portion 543 calculates a deterioration parameter. For example, firstly, the calculation portion 543 may identify a deterioration progression time period when deterioration of the facility 2 progressed.

The calculation portion 543 may identify the deterioration progression time period based on a label added to measurement data. The calculation portion 543 may set a measurement time point of the first measurement data with a label indicating that deterioration progressed, as the beginning period of a deterioration progression time period. Also, the calculation portion 543 may set a measurement time point of measurement data, the second or later of which a label indicating that a deterioration progressed was added to, (as an example, measurement data to which a label was added last) as the end period of a deterioration progression time period, and may set a measurement time point of any of measurement data, to which a label indicating that deterioration did not progress was added, as the end period of a deterioration progression time period.

In addition to this, the calculation portion 543 may identify a deterioration progression time period based on a deterioration state measurement value. For example, the calculation portion 543 may set a time point when a deterioration state measurement value started to decrease as the beginning period of a deterioration progression time period, and may set a time point when the decrease stopped, a time point when the deterioration state measurement value after the decrease was retained for a reference time, or the like as the end period of a deterioration progression time period.

When a deterioration progression time period is identified, the calculation portion 543 may calculate the portion of a progression rate of deterioration Vp of the facility 2 that increased during the period of time. The calculation portion 543 may read, from the storage portion 53, a deterioration state measurement value at the end period of a deterioration progression time period and a deterioration state measurement value at the beginning period, and may set, as a progression rate of deterioration Vp, a result from subtracting a deterioration state measurement value of the beginning period from a deterioration state measurement value of the end period.

Also, when the deterioration progression time period is identified, the calculation portion 543 may calculate a sum total of the deterioration strength index values during the period of time, $\Sigma\{KPI(i)\}$. The calculation portion 543 may sequentially input measurement data measured within the deterioration progression time period with respect to the model 431 generated by the learning processing portion 542, and may calculate a sum total of the deterioration strength index values outputted from the model 431, $\Sigma\{KPI(i)\}$.

The calculation portion 543 may calculate the deterioration parameter Coef by dividing a progression rate of deterioration Vp by a sum total $\Sigma\{KPI(i)\}$.

When the model 431 is generated and the deterioration parameter is calculated, the transmitter 513 transmits these to the estimation apparatus 4 at step S23. Thereby, at step S31, the model 431 and the deterioration parameter are received by the receiver 452 of the estimation apparatus 4, and stored in the storage portion 43.

At step S33, the acquisition portion 40 newly acquires measurement data. At step S35, the estimation portion 48 estimates a progression rate of deterioration of the facility 2 by using a deterioration strength index value KPI (i) outputted in response to inputting measurement data into the model 431, and the deterioration parameter Coef. The estimation portion 48 may calculate a progression rate of deterioration Vp (i) by multiplying a deterioration strength index value KPI (i) by the deterioration parameter Coef.

At step S37, the estimation portion 48 may estimate a deterioration accumulation rate Va (i) of the facility 2 by integrating the estimated progression rate of deterioration Vp (i), (i-1), ... In the present embodiment, as an example, the estimation portion 48 may calculate a deterioration accumulation rate Va (i) from a sum of progression rate of deterioration Vp (i) and a deterioration accumulation rate Va (i-1).

At step S39, the estimation portion 48 may output an estimated progression rate of deterioration Vp (i) and an estimated deterioration accumulation rate V (i). The estimation portion 48 may output a plurality of most recent progression rates of deterioration Vp and a transition of a plurality of deterioration accumulation rates Va. When the process of step S39 is finished, the estimation apparatus 4 may shift the process to step S33 mentioned above. The plurality of most recent progression rates of deterioration Vp and the plurality of deterioration accumulation rates Va may be a plurality of progression rates of deterioration Vp (i), (i-1), ... and the plurality of deterioration accumulation rates Va (i), (i-1), ... in the descending order from the current time.

[3. An operation example]

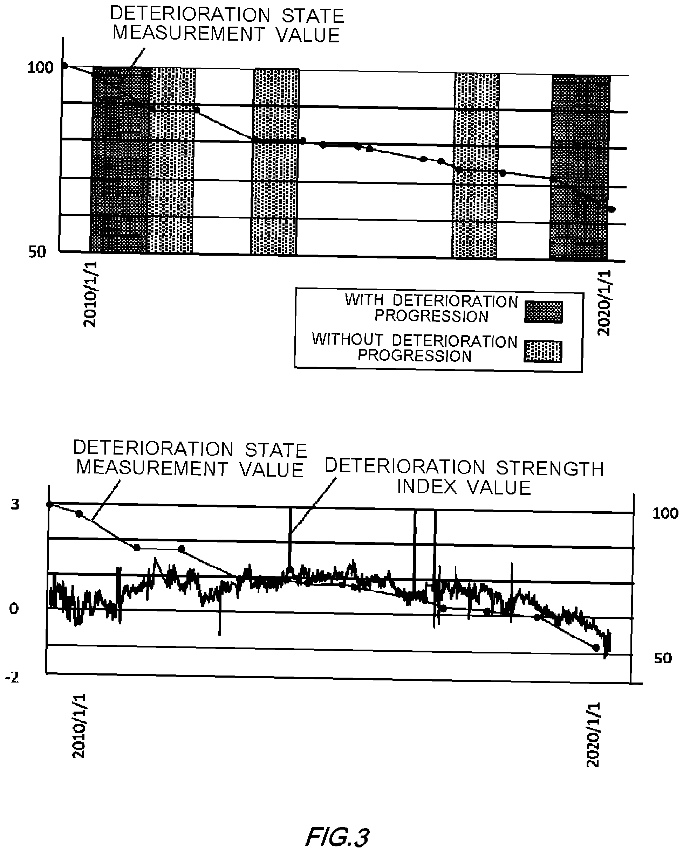

Fig. 3 shows a correspondence between a deterioration state measurement value and a deterioration strength index value KPI.

In the figure, the upper graph indicates a transition of deterioration state measurement values. The vertical axis indicates a measurement of a deterioration state measurement value (as an example, the thickness of a piping) and the horizontal axis indicates time. The hatched region indicates that a label indicating whether there is a progression of deterioration or not is added to measurement data measured within the region.

Also, in the figure, the lower graph indicates a transition of a deterioration strength index value KPI sequentially outputted from the model 431 into which measurement data of the same period of time as that of the upper graph in the figure is inputted. The vertical axis indicates a deterioration strength index value KPI (see the scale on the left) and a deterioration state measurement value (see the scale on the right), and the horizontal axis indicates time. Note that in the drawing, the smaller a deterioration strength index value KPI is, the larger the strength to cause deterioration of the facility 2 to progress is indicated to be.

As shown in this figure, according to the model 431, the deterioration strength index value KPIs with even higher strength are outputted during a period of time with deterioration state measurement values decreasing.

[4. A variation example]

Note that although it is described in the embodiment described above that the estimation apparatus 4 acquires the model 431 and a deterioration parameter from the generation apparatus 5, the estimation apparatus 4 may generate the model 431 and may calculate the deterioration parameter. In this case, the estimation apparatus 4 may have the learning processing portion 542 for generating the model 431 and the calculation portion 543 for calculating the deterioration parameter, and may not have the communication portion 45.

Also, although it is described that the generation apparatus 5 calculates a single deterioration parameter from a single deterioration progression time period, the generation apparatus 5 may calculate a plurality of deterioration parameters from a plurality of deterioration progression time periods. The plurality of deterioration progression time periods may be a time period with at least one of the beginning period or the end period being different. In this case, the estimation portion 48 of the estimation apparatus 4 may perform an estimation by using a plurality of deterioration parameters. For example, the estimation portion 48 may calculate a single progression rate of deterioration Vp (i) by using a plurality of results of multiplying each of a plurality of deterioration parameters Coef by a deterioration strength index value KPI (i). As an example, the estimation portion 48 may set an average value of the plurality of multiplication results as progression rate of deterioration Vp (i).

Also, although it has been described that the acquisition portion 510 acquires measurement data by communicating with the estimation apparatus 4, the acquisition portion 510 may read measurement data from a storage medium storing measurement data and connected to the generation apparatus 5.

Also, although it has been described that a deterioration progression time period is identified by the calculation portion 543, the deterioration progression time period may be set by an operator via the input portion 52. In this case, an operator may set any period of time as a deterioration progression time period based on a deterioration state measurement value.

Also, although it has been described that an object is the facility 2, the object may be other targets. For example, the object may be a product manufactured in the facility 2, or may be a natural object such as a living body. As an example, if the object is a flowmeter, an outputted voltage value or current value may be used as measurement data, and a result of a precision test of the flowmeter may be used as a deterioration state measurement value. Also, if the object is a pH measuring device, a measured temperature, flow, or salinity of a liquid may be used as measurement data, and a result of a precision test of the pH measuring device may be used as a deterioration state measurement value.

Moreover, various embodiments of the present invention may be described with reference to flowcharts and block diagrams, whose blocks may represent (1) steps of processes in which operations are executed or (2) units of apparatuses responsible for executing operations. Certain steps and sections may be implemented by dedicated circuitry, programmable circuitry supplied with computer-readable instructions stored on computer-readable media, and/or processors supplied with computer-readable instructions stored on computer-readable media. The dedicated circuitry may include a digital and/or analog hardware circuit, or may include an integrated circuit (IC) and/or a discrete circuit. The programmable circuitry may include a reconfigurable hardware circuit including logical AND, logical OR, logical XOR, logical NAND, logical NOR, and other logical operations, a memory element such as a flip-flop, a register, a field programmable gate array (FPGA) and a programmable logic array (PLA), and the like.

The computer-readable medium may include any tangible device capable of storing instructions for execution by a suitable device, so that the computer-readable medium having the instructions stored therein will have a product including instructions that can be executed to create means for performing the operations specified in flowcharts or block diagrams. Examples of computer-readable media may include an electronic storage medium, a magnetic storage medium, an optical storage medium, an electromagnetic storage medium, a semiconductor storage medium, and the like. More specific examples of computer-readable media may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a BLU-RAY (registered trademark) disk, a memory stick, an integrated circuit card, and the like.

The computer-readable instructions may include either source code or object code written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), JAVA (registered trademark), C++, or the like, and conventional procedural programming languages, such as the "C" programming language or similar programming languages.

The computer-readable instructions may be provided to a general-purpose computer, a special-purpose computer, or a processor or a programmable circuit of other programmable data processing apparatus locally or via a local area network (LAN) or a wide area network (WAN) such as the Internet, and execute the computer-readable instructions to create means for executing the operations designated in the flowcharts or block diagrams. Examples of processors include computer processors, processing units, microprocessors, digital signal processors, controllers, microcontrollers, and the like.

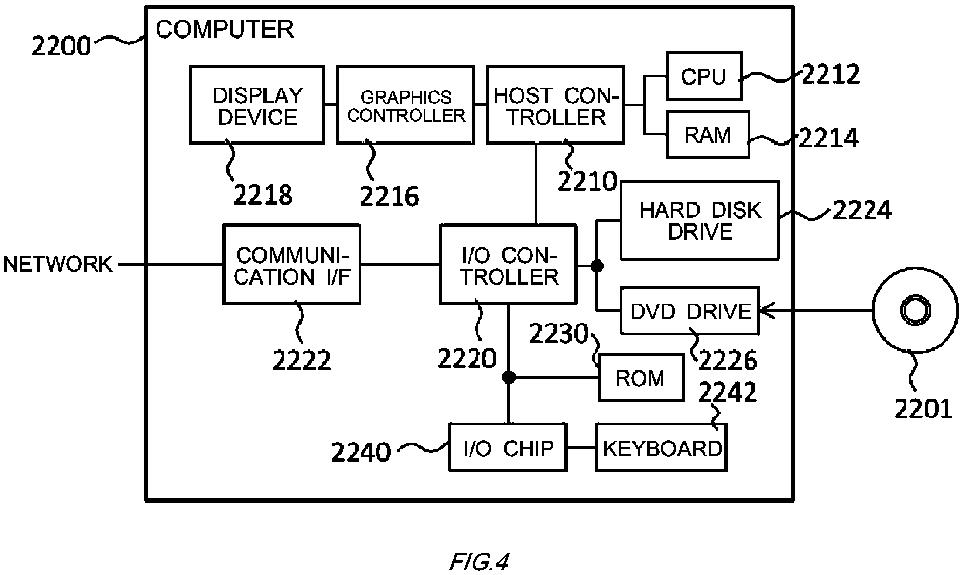

Fig. 4 illustrates an example of a computer 2200 in which a plurality of aspects of the present invention may be entirely or partially embodied. A program that is installed in the computer 2200 can cause the computer 2200 to function as or perform manipulations associated with apparatuses of the embodiments of the present invention or one or more sections thereof, and/or cause the computer 2200 to perform processes of the embodiments of the present invention or steps thereof. Such programs may be executed by a CPU 2212 to cause the computer 2200 to perform certain operations associated with some or all of the blocks in the flowcharts and block diagrams described in the present specification.

The computer 2200 according to the present embodiment includes a CPU 2212, a RAM 2214, a graphics controller 2216, and a display device 2218, which are mutually connected by a host controller 2210. The computer 2200 also includes an input/output unit such as a communication interface 2222, a hard disk drive 2224, a DVD-ROM drive 2226, and an IC card drive, which are connected to the host controller 2210 via an input/output controller 2220. The computer further includes legacy input/output units such as a ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or the data from the DVD-ROM 2201, and provides the hard disk drive 2224 with the programs or the data via the RAM 2214. The IC card drive reads programs and data from and/or writes programs and data to the IC card.

The ROM 2230 stores therein a boot program or the like executed by the computer 2200 at the time of activation, and/or a program depending on the hardware of the computer 2200. The input/output chip 2240 may also connect various input/output units via a parallel port, a serial port, a keyboard port, a mouse port, or the like to the input/output controller 2220.

A program is provided by computer-readable media such as the DVD-ROM 2201 or the IC card. The program is read from the computer-readable media, installed into the hard disk drive 2224, RAM 2214, or ROM 2230, which are also examples of computer-readable media, and executed by the CPU 2212. The information processing described in these programs is read into the computer 2200, resulting in cooperation between a program and the above-mentioned various types of hardware resources. An apparatus or method may be constituted by realizing the manipulation or processing of information in accordance with the usage of the computer 2200.

For example, when communication is executed between the computer 2200 and an external device, the CPU 2212 may execute a communication program loaded onto the RAM 2214, and instruct the communication interface 2222 to process the communication based on the processing written in the communication program. Under control of the CPU 2212, the communication interface 2222 reads transmission data stored in a transmission buffering region provided in a recording medium such as the RAM 2214, the hard disk drive 2224, the DVD-ROM 2201, or the IC card, and transmits the read transmission data to the network, or writes receive data received from the network to a receive buffering region or the like provided on the recording medium.

In addition, the CPU 2212 may cause all or a necessary portion of a file or a database to be read into the RAM 2214, the file or the database having been stored in an external recording medium such as the hard disk drive 2224, the DVD-ROM drive 2226 (DVD-ROM 2201), the IC card, etc. and perform various types of processes on data on the RAM 2214. The CPU 2212 may then write back the processed data to the external recording medium.

Various types of information such as various types of programs, data, tables, and databases may be stored in a recording medium and subjected to information processing. The CPU 2212 may perform various types of processing on the data read from the RAM 2214, which includes various types of manipulations, processing of information, condition judging, conditional branch, unconditional branch, search/replace of information, etc., as described throughout this disclosure and designated by an instruction sequence of programs, and writes the result back to the RAM 2214. In addition, the CPU 2212 may search for information in a file, a database, etc., in the recording medium. For example, when plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The above-explained program or software modules may be stored in the computer-readable media on or near the computer 2200. In addition, a recording medium such as a hard disk or a RAM provided in a server system connected to a dedicated communication network or the Internet can be used as the computer-readable media, thereby providing the program to the computer 2200 via the network.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

EXPLANATION OF REFERENCES

1 System
2 Facility
4 Estimation apparatus
5 Generation apparatus
20 Sensor
21 Equipment
40 Acquisition portion
43 Storage portion
45 Communication portion
48 Estimation portion
51 Communication portion
52 Input portion
53 Storage portion
54 Generation portion
430 Measurement result file
431 Model
432 Parameter file
433 Estimation result file
451 Transmitter
452 Receiver
510 Acquisition portion
513 Transmitter
530 Measurement result file
531 Learning data
542 Learning processing portion
543 Calculation portion
2200 Computer
2201 DVD-ROM
2210 Host controller
2212 CPU
2214 RAM
2216 Graphics controller
2218 Display device
2220 Input/output controller
2222 Communication interface
2224 Hard disk drive
2226 DVD-ROM drive
2230 ROM
2240 Input/output chip
2242 Keyboard

**Claims**

1.  An apparatus comprising:

    an acquisition portion for acquiring measurement data measured for a state of an object;
    a storage portion for storing a model that outputs a deterioration strength index value indicating strength of causing the object to deteriorate, and a deterioration parameter indicating a correspondence between the deterioration strength index value and a progression rate of deterioration of the object, in response to an input of the measurement data; and
    an estimation portion for estimating a progression rate of deterioration of the object by using the deterioration strength index value outputted in response to inputting the measurement data into the model, and the deterioration parameter.

2.  The apparatus according to claim 1, wherein the estimation portion is configured to estimate a deterioration accumulation rate of the object by integrating a progression rate of deterioration estimated by using the deterioration strength index value outputted in response to inputting the measurement data into the model, and the deterioration parameter.

3.  The apparatus according to claim 1 or 2, comprising:

    a transmitter for transmitting the measurement data acquired by the acquisition portion to other apparatus; and
    a receiver for receiving the model and the deterioration parameter from the other apparatus.

4.  The apparatus according to claim 1 or 2, comprising:

    a learning processing portion for generating the model by using learning data including the measurement data and a value indicating a deterioration state of the object; and
    a calculation portion for calculating a deterioration parameter indicating a correspondence between the deterioration strength index value and a progression rate of deterioration of the object.

5.  An apparatus comprising:

    an acquisition portion for acquiring measurement data from an object;
    a learning processing portion for generating a model that outputs a deterioration strength index value indicating strength of causing the object to deteriorate in response to an input of the measurement data by using learning data including the measurement data and a value indicating a deterioration state of the object; and
    a calculation portion for calculating a deterioration parameter indicating a correspondence between the deterioration strength index value and a progression rate of deterioration of the object.

6.  The apparatus according to claim 5, comprising a transmitter for transmitting the model and the deterioration parameter to other apparatus that acquires the measurement data from the object.

7.  The apparatus according to any one of claims 4 to 6, wherein the learning processing portion is configured to generate the model by using the learning data including the measurement data and a value indicating a deterioration state of the object for each of a plurality of periods of time when the measurement data was measured.

8.  The apparatus according to any one of claims 4 to 7, wherein the value indicating a deterioration state is a binary value indicating whether there is a progression of deterioration of the object or not.

9.  The apparatus according to any one of claims 4 to 8, wherein the calculation portion is configured to calculate the deterioration parameter based on a sum total of the deterioration strength index values outputted from the model in response to an input of the measurement data measured during a period of time when a deterioration of the object progressed, and a progression rate of deterioration that increased during the period of time.

10. The apparatus according to any one of claims 1 to 9, wherein the deterioration parameter indicates a progression rate of deterioration of the object per unit amount of the deterioration strength index value.

11. The apparatus according to any one of claims 1 to 10, wherein the model outputs, as the deterioration strength index value, a level of divergence between the inputted measurement data and the measurement data in a case where a deterioration of the object does not progress.

12. The apparatus according to claim 11, wherein the model outputs, as the deterioration strength index value, a level of divergence between the inputted measurement data and the measurement data in a case where a deterioration of the object is on a boundary regarding whether a deterioration of the object progresses or not.

13. A method comprising:

    acquiring measurement data measured for a state of an object;
    storing a model that outputs a deterioration strength index value indicating strength of causing the object to deteriorate, and a deterioration parameter indicating a correspondence between the deterioration strength index value and a progression rate of deterioration of the object, in response to an input of the measurement data; and

estimating a progression rate of deterioration of the object by using the deterioration strength index value outputted in response to inputting the measurement data into the model, and the deterioration parameter.

14. A method comprising:

acquiring measurement data from an object;
processing learning by generating a model that outputs a deterioration strength index value indicating strength of causing the object to deteriorate in response to an input of the measurement data by using learning data including the measurement data and a value indicating a deterioration state of the object; and
calculating a deterioration parameter indicating a correspondence between the deterioration strength index value and a progression rate of deterioration of the object.

15. A program, causing a computer to function as:

an acquisition portion for acquiring measurement data measured for a state of an object;
a storage portion for storing a model that outputs a deterioration strength index value indicating strength of causing the object to deteriorate, and a deterioration parameter indicating a correspondence between the deterioration strength index value and a progression rate of deterioration of the object, in response to an input of the measurement data; and
an estimation portion for estimating a progression rate of deterioration of the object by using the deterioration strength index value outputted in response to inputting the measurement data into the model, and the deterioration parameter.

16. A program, causing a computer to function as:

an acquisition portion for acquiring measurement data from an object;
a learning processing portion for generating a model that outputs a deterioration strength index value indicating strength of causing the object to deteriorate in response to an input of the measurement data by using learning data including the measurement data and a value indicating a deterioration state of the object; and
a calculation portion for calculating a deterioration parameter indicating a correspondence between the deterioration strength index value and a progression rate of deterioration of the object.

*FIG.1*

ESTIMATION APPARATUS

GENERATION APPARATUS

START

ACQUIRE MEASUREMENT DATA — S11

TRANSMIT MEASUREMENT DATA — S13

ACQUIRE MEASUREMENT DATA — S15

ACQUIRE A DETERIORATION STATE MEASUREMENT VALUE — S17

GENERATE A MODEL — S19

CALCULATE A DETERIORATION PARAMETER — S21

RECEIVE — S31

TRANSMIT — S23

ACQUIRE MEASUREMENT DATA — S33

ESTIMATE A PROGRESSION RATE OF DETERIORATION — S35

ESTIMATE A DETERIORATION ACCUMULATION RATE — S37

OUTPUT — S39

*FIG.2*

FIG.3

FIG.4

Europäisches
Patentamt

European
Patent Office

Office européen
des brevets

# EUROPEAN SEARCH REPORT

**Application Number**

EP 22 16 1139

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUN JIANZHONG ET AL: "Aircraft air conditioning system health state estimation and prediction for predictive maintenance", CHINESE JOURNAL OF AERONAUTICS, ELSEVIER, AMSTERDAM, NL, vol. 33, no. 3, 30 May 2019 (2019-05-30), pages 947-955, XP086137988, ISSN: 1000-9361, DOI: 10.1016/J.CJA.2019.03.039 [retrieved on 2019-05-30] | 1-3,5,6, 10-13,15 | INV. G06N20/00 G05B23/00 G05B17/00 H04Q9/00 |
| Y | * figure 5 * * paragraph [02.2] * * paragraph [03.2] * * paragraph [04.1] * ----- | 4,7-9 | |
| X | US 2019/324070 A1 (SANEYOSHI EISUKE [JP] ET AL) 24 October 2019 (2019-10-24) | 5,14,16 | |
| Y | * paragraph [0002] * * figure 1 * * paragraph [0066] - paragraph [0067] * * paragraph [0113] * * paragraph [0071] - paragraph [0076] * * figures 5B-6B * ----- | 4,7-9 | TECHNICAL FIELDS SEARCHED (IPC) |
| A | ZHANG JIANJING ET AL: "Long short-term memory for machine remaining life prediction", JOURNAL OF MANUFACTURING SYSTEMS, SOCIETY OF MANUFACTURING ENGINEERS, DEARBORN, MI, US, vol. 48, 4 June 2018 (2018-06-04), pages 78-86, XP085479454, ISSN: 0278-6125, DOI: 10.1016/J.JMSY.2018.05.011 * the whole document * ----- | 4,5,14, 16 | G06N G05B H04Q |
| | -/-- | | |

The present search report has been drawn up for all claims

| Place of search | Date of completion of the search | Examiner |
|---|---|---|
| Munich | 2 August 2022 | D'Inca, Rodolphe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................

& : member of the same patent family, corresponding
document

EPO FORM 1503 03.82 (P04C01)

# EP 4 064 138 A1

**EUROPEAN SEARCH REPORT**

Application Number

EP 22 16 1139

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 5 056537 B2 (YOKOGAWA ELECTRIC CORP) 24 October 2012 (2012-10-24) * the whole document * | 1 | |
| A | US 7 158 919 B2 (ROLLS ROYCE PLC [GB]) 2 January 2007 (2007-01-02) * figure 1 * | 3,6 | |
| A | Emmanuel Ramasso ET AL: "Making use of partial knowledge about hidden states in HMMs: an approach based on belief functions", , 1 July 2013 (2013-07-01), XP055133633, DOI: 10.1109/TFUZZ.2013.2259496 Retrieved from the Internet: URL:http://hal.archives-ouvertes.fr/docs/00/83/41/77/PDF/PS_HMM_final-1.pdf [retrieved on 2014-08-06] * the whole document * | 4,5,14,16 | |
| A | LUO BO ET AL: "Early Fault Detection of Machine Tools Based on Deep Learning and Dynamic Identification", IEEE TRANSACTIONS ON INDUSTRIAL ELECTRONICS, IEEE SERVICE CENTER, PISCATAWAY, NJ, USA, vol. 66, no. 1, 1 January 2019 (2019-01-01), pages 509-518, XP011689505, ISSN: 0278-0046, DOI: 10.1109/TIE.2018.2807414 [retrieved on 2018-08-31] * the whole document * | 4,5,14,16 | |

TECHNICAL FIELDS SEARCHED (IPC)

The present search report has been drawn up for all claims

| Place of search | Date of completion of the search | Examiner |
|---|---|---|
| Munich | 2 August 2022 | D'Inca, Rodolphe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

page 2 of 2

19

## ANNEX TO THE EUROPEAN SEARCH REPORT
## ON EUROPEAN PATENT APPLICATION NO.

EP 22 16 1139

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2022

| Patent document cited in search report | | Publication date | Patent family member(s) | | Publication date |
|---|---|---|---|---|---|
| US 2019324070 | A1 | 24-10-2019 | JP WO2018101363 | A1 | 24-10-2019 |
| | | | US 2019324070 | A1 | 24-10-2019 |
| | | | WO 2018101363 | A1 | 07-06-2018 |
| JP 5056537 | B2 | 24-10-2012 | JP 5056537 | B2 | 24-10-2012 |
| | | | JP 2009244061 | A | 22-10-2009 |
| US 7158919 | B2 | 02-01-2007 | EP 1492379 | A2 | 29-12-2004 |
| | | | US 2006265193 | A1 | 23-11-2006 |

For more details about this annex : see Official Journal of the European Patent Office, No. 12/82

**EP 4 064 138 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009244061 A